# EUROPEAN PATENT APPLICATION

(11) **EP 4 819 265 A1**
(43) Date of publication of application: **07.10.2026**
(21) Application number: 24897727.4
(22) Date of filing: 05.01.2024
(51) Int. Cl.: H01M 10/04, H01M 10/0585, H01M 10/0562

(54) **ALL-SOLID RECHARGEABLE BATTERY**

(30) Priority: 30.11.2023 KR 20230171627
(71) Applicant: SAMSUNG SDI CO., LTD., Yongin-si, Gyeonggi-do 17084 (KR)
(72) Inventor: SHIN, Isaac, Yongin-si, Gyeonggi-do 17084 (KR); KIM, Riyul, Yongin-si, Gyeonggi-do 17084 (KR); SUH, Kwang Jong, Yongin-si, Gyeonggi-do 17084 (KR); RYU, Young Gyoon, Yongin-si, Gyeonggi-do 17084 (KR)
(74) Representative: Michalski Hüttermann & Partner mbB
(86) International application number: PCT/KR2024/000281
(87) International publication number: WO 2025/116123

(57) **Abstract**

An all-solid rechargeable battery includes an all-solid cell stack including a plurality of all-solid unit cells stacked in a first direction; a case that stores the all-solid cell stack inside; a first end plate positioned between the first end portion of the all-solid cell stack in the first direction and the case; and a plurality of first metal wave springs positioned between the first end plate and the case.

## Description

### [Technical Field]

The present disclosure relates to an all-solid rechargeable battery.

### [Background Art]

Recently, as a risk of an explosion in batteries using liquid electrolytes has been reported, the development of all-solid rechargeable batteries is underway. The all-solid rechargeable battery refers to a battery in which all materials are made of solids and uses a solid electrolyte.

These all-solid rechargeable batteries are safe as there is no risk of the explosion due to an electrolyte solution leakage, and have the merit of being easy to manufacture thin batteries.

The conventional all-solid rechargeable battery includes an all-solid cell stack including a plurality of all-solid unit cells stacked in one direction, a case for storing the all-solid cell stack inside, and a pressurizing means for pressurizing the all-solid cell stack and the case.

### [Disclosure]

### [Technical Problem]

One embodiment is to provide an all-solid rechargeable battery in which an all-solid cell stack is uniformly pressed over a wide temperature range, impact resistance is improved, an entire thickness is reduced, and simultaneously energy density is improved compared to thickness, in response to the all-solid cell stack whose thickness may change during charge and discharge.

### [Technical Solution]

An all-solid rechargeable battery including: an all-solid cell stack including a plurality of all-solid unit cells stacked in a first direction; a case that stores the all-solid cell stack inside; a first end plate positioned between the first end portion of the all-solid cell stack in the first direction and the case; and a plurality of first metal wave springs positioned between the first end plate and the case is provided.

The plurality of first metal wave springs may be in contact with the first end plate.

The first end plate may include a plurality of first depressed portions arranged spaced apart from each other in a second direction intersecting the first direction, and the plurality of first metal wave springs may be each inserted into the plurality of first depressed portions.

A second end plate positioned between the plurality of first metal wave springs and the case and in contact with the plurality of first metal wave springs may be further included.

The second end plate may include a plurality of second depressed portions arranged spaced apart from each other in the second direction, corresponding to the plurality of first depressed portions of the first end plate, and the plurality of first metal wave springs may be each inserted into the plurality of second depressed portions.

The second end plate is may be in contact with the case.

The plurality of first metal wave springs may be in contact with the case.

The plurality of first metal wave springs may each include a ring type wave spring.

The ring type wave spring may include a wave spring of which waves with a shape symmetrical to each other are stacked and extended in a direction in which an elasticity restoring force is generated.

The ring type wave spring may include a wave spring in which a single-layer wave is extended in a ring shape.

The ring type wave spring may include a wave spring in which waves of the same shape are stacked and extended in a direction in which an elasticity restoring force is generated.

A third end plate positioned between the second end portion of the all-solid cell stack in the first direction and the case, and a plurality of second metal wave springs positioned between the third end plate and the case may be further included.

The plurality of second metal wave springs may be in contact with the third end plate.

The third end plate may include a plurality of third depressed portions arranged spaced apart from each other in a second direction intersecting the first direction, and the plurality of second metal wave springs may be each inserted into the plurality of third depressed portions.

A fourth end plate positioned between the plurality of second metal wave springs and the case and in contact with the plurality of second metal wave springs may be further included.

The fourth end plate may include a plurality of fourth depressed portions arranged to be spaced apart from each other in the second direction, corresponding to the plurality of third depressed portions of the third end plate, and the plurality of second metal wave springs may be each inserted into the plurality of fourth depressed portions.

The fourth end plate may be in contact with the case.

The plurality of second metal wave springs may be in contact with the case.

The all-solid cell stack may further include a plurality of cushioning pads positioned between the plurality of all-solid unit cells.

Each of the all-solid unit cells may include: a negative electrode; a positive electrode positioned on the negative electrode; and a solid electrolyte layer positioned between the negative electrode and the positive electrode.

### [Advantageous Effects]

According to an embodiment, the all-solid rechargeable battery in which an all-solid cell stack is uniformly pressed over a wide temperature range, impact resistance is improved, an entire thickness is reduced, and simultaneously energy density is improved compared to a thickness, in response to the all-solid cell stack whose thickness may change during a charge and discharge is provided.

### [Description of the Drawings]

FIG. 1 is a cross-sectional view of an all-solid battery.
FIG. 2 is a cross-sectional view of an all-solid battery including a precipitated negative electrode.
FIG. 3 is a cross-sectional view showing an all-solid rechargeable battery according to an embodiment.
FIG. 4 is an enlarged cross-sectional view of a part A in FIG. 3.
FIG. 5 is a view showing an example of a first metal wave spring of an all-solid rechargeable battery according to an embodiment.
FIG. 6 is a view showing another example of a first metal wave spring of an all-solid rechargeable battery according to an embodiment.
FIG. 7 is a view showing another example of a first metal wave spring of an all-solid rechargeable battery according to an embodiment.
FIG. 8 is an enlarged cross-sectional view of a part B in FIG. 3.
FIG. 9 is a cross-sectional view showing an all-solid rechargeable battery according to another embodiment.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise", and variations such as "comprises" or "comprising", will be understood to imply the inclusion of stated elements but not the exclusion of any other elements.

In order to clearly express multiple layers and regions in the drawing, the thickness is enlarged and shown. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Herein, "or" is not to be construed as an exclusive meaning, for example, "A or B" is construed to include A, B, A+B, and the like.

### A positive electrode for an all-solid rechargeable battery

In an embodiment, as a positive electrode for an all-solid rechargeable battery including a current collecting layer and a positive active material layer positioned on the current collecting layer, the positive electrode for the all-solid rechargeable battery having the positive active material layer includes at least one positive active material, a sulfide-based solid electrolyte, a binder, and one conductive material is provided. However, without being limited thereto, the positive electrode for the all-solid rechargeable battery may include more or fewer components than the components described above.

In one embodiment, the positive electrode for an all-solid rechargeable battery is manufactured by coating a positive electrode composition including at least one of the positive active material, the sulfide-based solid electrolyte, the binder, and the conductive material to the current collecting layer, and then drying and rolling.

### A positive active material

The positive active materials may be applied without limitation as long as they are generally-used in the all-solid rechargeable batteries. For example, the positive active material may be a compound capable of reversible intercalation and deintercalation of lithium, and may include a compound expressed by any of the following Chemical Formulas.
LiₐA_{1-b}X_{b}D₂ (0.90 ≤ a ≤ 1.8, 0 ≤ b ≤ 0.5);
LiₐA_{1-b}X_{b}O_{2-c}D_{c} (0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiₐE_{2-b}X_{b}O_{4-c}D_{c} (0.90 ≤ a ≤ 1.8, 0 ≤ b ≤ 0.5, 0 ≤ c ≤ 0.05);
LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2);
LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α <2);
LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α <2);
LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);
LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);
LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂ (0.90 ≤ a ≤ 1.8, 0.001 ≤ b ≤ 0.1);
LiₐCoG_{b}O₂ (0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li _{(3-f)}J₂(PO₄)₃ (0 ≤ f ≤ 2);
Li _{(3-f)}Fe₂(PO₄)₃ (0 ≤ f ≤ 2);
LiₐFePO₄ (0.90 ≤ a ≤ 1.8).

In the above Chemical Formulas, A is selected from the group consisting of Ni, Co, Mn, and a combination thereof; X is selected from the group consisting of Al, Ni, Co, Mn, Cr, Fe, Mg, Sr, V, a rare earth element, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive active materials, for example, may be lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), or lithium iron phosphate oxide (LFP), etc.

The positive active material may include a lithium nickel-based oxide represented by Chemical Formula 1 below, a lithium cobalt-based oxide represented by Chemical Formula 2, a lithium phosphoric acid iron-based compound represented by Chemical Formula 3, or combinations thereof.

[Chemical Formula 1] Liₐ₁Niₓ₁M¹_{y1}M²_{1-x1-y1}O₂

In the Chemical Formula 1, 0.9≤a1≤1.8, 0.3≤x1≤1, 0≤y1≤0.7, and M¹ and M² are each independently one or more element selected from a group including Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Chemical Formula 2, 0.9≤a2≤1.8, 0.6≤x2≤1, M³ is one or more element selected from a group including Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴₁₋ₓ₃PO₄

In Chemical Formula 3, 0.9≤a3≤1.8, 0.6≤x3≤1, and M⁴ is one or more element selected from a group including Al, B, Ba, Ca, Ce, Co, Cr, Cu, F, Fe, Mg, Mn, Mo, Nb, P, S, Si, Sr, Ti, V, W, and Zr.

The average particle diameter D50 of the positive active material may be 1 µm to 25 µm, for example, 3 µm to 25 µm, 5 µm to 25 µm, 5 µm to 20 µm, 8 µm to 20 µm, or 10 µm to 18 µm. The positive active material with these particle diameter ranges may be harmoniously mixed with other components within the positive active material layer and may achieve high capacity and high energy density.

The positive active material may be in a form of a secondary particle made by coagulating a plurality of primary particles, or may be in the form of a single particle. Additionally, the positive active material may be a spherical shape or a shape close to a spherical shape, or may be polyhedral or irregular.

### A sulfide-based solid electrolyte

The sulfide-based solid electrolyte may be, for example, Li₂S-P₂S₅, Li₂S-P₂S--LiX (X is a halogen element, for example I or Cl), Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (m and n are each an integer and Z is Ge, Zn, or Ga), Li₂S-GeS₂, Li₂S-SiS₂-Li₃PO₄, Li₂S-SiS₂-LipMOq (p and q are integers and M is P, Si, Ge, B, Al, Ga, or In), and the like.

The sulfide-based solid electrolyte may be obtained by, for example, mixing Li₂S and P₂S₅ in a mole ratio of about 50:50 to about 90:10 or about 50:50 to about 80:20 and selectively heat treating. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

Mechanical milling or a solution method may be applied as a mixing method of a sulfur-including raw material to produce the sulfide-based solid electrolyte. The mechanical milling method is to make starting materials into particulates by putting starting materials, ball mills, and the like in a reactor and fervently stirring them. The solution method may be performed by mixing the starting materials in a solvent to obtain a solid electrolyte as a precipitate. Additionally, if heat treatment is performed after the mixing, the solid electrolyte crystals may become stronger and ion conductivity may be improved. For example, the sulfide-based solid electrolyte may be manufactured by mixing the sulfur-including raw materials and heat treating it more than twice, and in this case, the sulfide-based solid electrolyte with high ion conductivity and robustness may be manufactured.

As an example, the sulfide-based solid electrolyte particle may be an argyrodite-type sulfide. The argyrodite -type sulfide, for example, be expressed as a Chemical Formula of LiₐM_{b}P_{c}S_{d}Aₑ (a, b, c, d, and e are all 0 or more and 12 or less, M is a combination of a metal excluding Li or a plurality of metals excluding Li, A is F, Cl, Br, or I), and as a specific example, may be expressed as a Chemical Formula of Li₇₋ₓPS₆₋ₓAₓ (x is 0.2 or more and 1.8 or less, and A is F, Cl, Br, or I). The azirodite-type sulfide may specifically be Li₃PS₄, Li₇P₃S₁₁, Li₇PS₆, Li₆PS₅Cl, Li₆PS₅Br, Li₅.₈PS₄.₈Cl1.2, Li₆.₂PS₅.₂Br₀.₈, etc.

This sulfide-based solid electrolyte including the azirodite-type sulfide has high ionic conductivity close to about 10-4 to about 10-2 S/cm, which is ionic conductivity of a general liquid electrolyte, at room temperature and thus, may form close coupling between the positive active material and the solid electrolyte without deteriorating the ion conductivity, and furthermore, form a close interface between the electrode layer and the solid electrolyte layer. An all-solid-state battery including the same may exhibit improved battery performance such as rate capability, Coulomb efficiency, and cycle-life characteristics.

The azirodite-type sulfide-based solid electrolyte may be produced, for example, by mixing sulfidelithium, phosphosulfid, and selectively halogenated lithium. After mixing them, heat treatment may be performed. The heat treatment may include, for example, two or more heat treatment steps.

The average particle diameter D50 of the sulfide-based solid electrolyte particle according to one embodiment may be 5.0 µm or less, for example, 0.1 µm to 5.0 µm, 0.1 µm to 4.0 µm, 0.1 µm to 3.0 µm, 0.5 µm to 2.0 µm, or 0.1 µm to 1.5 µm. Alternatively, the sulfide-based solid electrolyte particle may be a small particle with an average particle diameter D50 of 0.1 µm to 1.0 µm, or a large particle with an average particle diameter D50 of 1.5 µm to 5.0 µm, depending on the position or purpose for which it is used. The sulfide-based solid electrolyte particles in this particle diameter range may effectively penetrate between the solid particles within the battery, and have excellent contact with the electrode active material and connectivity between the solid electrolyte particles. The average particle diameter of the sulfide-based solid electrolyte particle may be measured using a microscope image. For example, a particle size distribution may be obtained by measuring the size of about 20 particles in a scanning electron microscope image, and D50 may be calculated from this.

The content of the solid electrolyte in the positive electrode for the all-solid battery may be 0.5 wt% to 35 wt%, for example, 1 wt% to 35 wt%, 5 wt% to 30 wt%, 8 wt% to 25 wt%, or 10 wt% to 20 wt%. This is the content of the total weight of the components within the positive electrode, and may specifically be said to be the content of the total weight of the positive active material layer.

In one embodiment, the positive active material layer may include, for 100 wt% of the positive active material layer, 50 wt% to 99.35 wt% of the positive active material, 0.5 wt% to 35 wt% of the sulfide-based solid electrolyte, 0.1 wt% to 10 wt% of a fluorinated resin binder, and 0.05 wt% to 5 wt% of a vanadium oxide. If this content range is satisfied, the positive electrode for the all-solid rechargeable battery maintains high adherence while implementing high-capacity and high ion conductivity, and a viscosity of the positive electrode composition is maintained at an appropriate level, thereby improving processability.

### A binder

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

### A conductive material

The positive active material layer may further include a conductive material. The conductive material is included to provide electrode conductivity, and examples of the conductive material may include: a carbon-based material such as natural graphite, artificial graphite, carbon black, acetylene black, ketjen black, a carbon fiber, carbon nanotube, and the like; a metal-based material of a metal powder or a metal fiber including copper, nickel, aluminum, silver, and the like; a conductive polymer such as a polyphenylene derivative; or a mixture thereof.

The conductive material may be included from 0.1 wt% to 5 wt%, or 0.1 wt% to 3 wt%, with respect to the total weight of each component of the positive electrode for the all-solid battery, or with respect to the total weight of the positive active material layer. In the content range, the conductive materials may improve electrical conductivity without deteriorating battery performance.

When the positive active material layer further includes the conductive material, the positive active material layer, for the positive active material layer of 100 wt%, may include 45 wt% to 99.25 wt% of the positive active material, 0.5 wt% to 35 wt% of the sulfide-based solid electrolyte, 0.1 wt% to 10 wt% of the fluorinated resin binder, 0.05 wt% to 5 wt% of the vanadium oxide, and 0.1 wt% to 5 wt% of the conductive material.

Meanwhile, the positive electrode for the lithium rechargeable battery may further include an oxide-based inorganic solid electrolyte in addition to the solid electrolyte described above. The oxide-based inorganic solid electrolyte, for example, may include Li₁₊ₓTi₂₋ₓAl (PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃ (PLZT) (0≤x<1, 0≤y<1), PB (Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y} PO₄₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂ based ceramics, garnet based ceramics Li₃₊ₓLa₃M₂O₁₂ (M= Te, Nb, or Zr; x is an integral of 1 to 10), or a combination thereof. _{@@@} @@@ @@@ @@@

### An all-solid rechargeable battery

One embodiment provides an all-solid rechargeable battery including the above-described positive electrode, negative electrode, and solid electrolyte layer positioned between the positive electrode and the negative electrode. The all-solid rechargeable battery may also be expressed as an all-solid battery, or an all-solid lithium rechargeable battery.

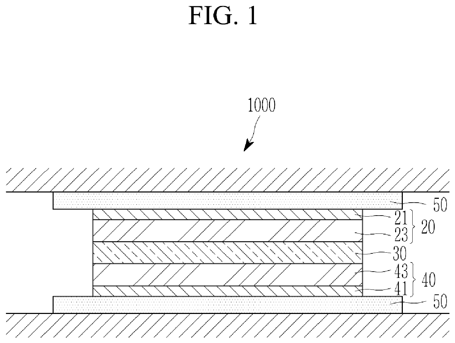

FIG. 1 is a cross-sectional view of an all-solid battery.

Referring to FIG. 1, an all-solid battery 1000 may be a structure in which an electrode assembly in which a negative electrode 40 including a negative electrode collecting layer 41 and a negative active material layer 43, a solid electrolyte layer 30, and a positive electrode 20 including a positive active material layer 23 and a positive electrode collecting layer 21 are stacked is accommodated in a case such as a pouch or a can. The all-solid battery 1000 may further include an elasticity layer 50 outside at least one of the positive electrode 20 and the negative electrode 40. FIG. 1 shows one electrode assembly including the negative electrode 40, the solid electrolyte layer 30, and the positive electrode 20, but an all-solid battery may be manufactured by stacking two or more electrode assemblies.

### A negative electrode

The negative electrode for the all-solid battery may include, for example, a current collecting layer and a negative active material layer positioned on the current collecting layer. The negative active material layer includes a negative active material and may further include a binder, a conductive material, and/or a solid electrolyte.

The negative active material includes a material that can perform reversible intercalation and deintercalation of lithium ions, a lithium metal, an alloy of the lithium metal, a material doping or dedoping lithium, or a transition metal oxide.

The material that reversibly intercalates/deintercalates lithium ions may include, for example crystalline carbon, amorphous carbon, or a combination thereof as a carbon-based negative active material. The crystalline carbon may be non-shaped, or plate, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy, wherein Q is an alkali metal, an alkaline-earth metal, a Group 13 element, a Group 14 element, a Group 15 element, a Group 16 element, a transition metal, a rare earth element, and a combination thereof, but Si and the Sn-based negative active material may not include Sn, SnO₂, a Sn-R alloy, wherein R is an alkali metal, an alkaline-earth metal, a Group 13 element, a Group 14 element, a Group 15 element, a Group 16 element, a transition metal, a rare earth element, and a combination thereof, but not Sn. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm.

An average particle diameter (D50) of the silicon particles may be about 10 nm to about 20 µm, for example, 10 nm to 500 nm. The silicon particles may exist in an oxidized form, and in this case, an atomic content ratio of Si:O in the silicon particles indicating a degree of oxidation may be a weight ratio of about 99:1 to about 33:67. The silicon particles may be SiOₓ particles, and in this case, the range of x in SiOₓ may be greater than about 0 and less than about 2. Here, the average particle diameter D50 is measured with a particle size analyzer using a laser diffraction method and indicates a particle where an accumulated volume is about 50 vol% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 10:90.

In the negative active material layer, the negative active material may be included in an amount of about 95 wt% to about 99 wt% based on the total weight of the negative active material layer.

In an embodiment, the negative active material layer includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, a polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropyl methylcellulose, methyl cellulose, or alkali metal salts thereof may be mixed and used. As the alkali metal, Na, K, or Li may be used. The amount of the thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a powder or a fiber including copper, nickel, aluminum, silver, and the like; a conductive polymer such as a polyphenylene derivative; or a mixture thereof.

The current collector may include one selected from a copper foil, a nickel foil, a stainless-steel foil, a titanium foil, a nickel foam, a copper foam, a polymer substrate coated with a conductive metal, and a combination thereof.

On the other hand, the negative electrode for the all-solid battery may be, for example, a precipitation-type negative electrode. The precipitation-type negative electrode may be a negative electrode which has no negative active material during the assembly of an electrochemical battery but in which a lithium metal and the like are precipitated during the charge of the electrochemical battery and serve as a negative active material.

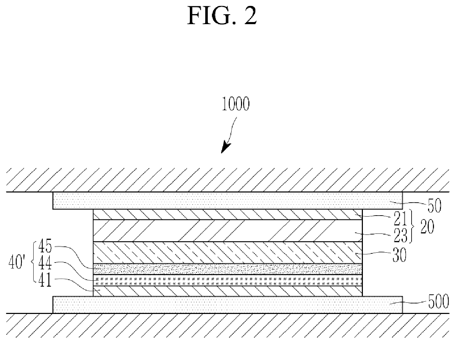

FIG. 2 is a cross-sectional view of an all-solid battery including a precipitation-type negative electrode.

Referring to FIG. 2, the precipitation-type negative electrode 40' may include a current collecting layer 41 and a negative coating layer 45 placed on the current collecting layer 41. The rechargeable lithium battery having this precipitation-type negative electrode 40' starts to be initially charged in absence of a negative active material, and a lithium metal with high density and the like are precipitated between the current collecting layer 41 and the negative coating layer 45 during the charge and form a lithium metal layer 44, which may work as a negative active material. Accordingly, the precipitation-type negative electrode 40', in the all-solid battery which is charged more than once, may include the current collecting layer 41, the lithium metal layer 44 on the current collecting layer 41, and the negative coating layer 45 disposed on the metal layer. The lithium metal layer 44 means a layer of the lithium metal and the like precipitated during the charge of the electrochemical battery and may be called a metal layer, a negative active material layer, or the like and act as a negative active material

The negative coating layer 45 includes a metal or a carbon material which plays a role of a catalyst.

The metal may include gold, platinum, palladium, silicon silver, aluminum, bismuth, tin, zinc, or a combination thereof and may be composed of one selected therefrom or an alloy of more than one. The metal included in the negative electrode catalyst layer may have an average particle diameter (D50) of less than or equal to about 4 µm, for example, about 10 nm to about 4 µm.

The carbon material may be, for example, crystalline carbon, non-graphitic carbon, or a combination thereof. The crystalline carbon may be, for example, at least one selected from natural graphite, artificial graphite, mesophase carbon microbeads, and a combination thereof. The amorphous carbon may be at least one selected from carbon black, activated carbon, acetylene black, denka black, ketjen black, and a combination thereof.

When the negative coating layer 45 includes the metal and the carbon material, the metal and the carbon material may be, for example, mixed in a weight ratio of about 1:10 to about 2:1. Herein, the precipitation of the lithium metal may be effectively promoted and improve characteristics of the all-solid battery. The negative coating layer 45 may include, for example, a carbon material on which a catalyst metal is supported or a mixture of metal particles and carbon material particles.

The negative coating layer 45 may include a metal and an amorphous carbon, for example, and in this case, it may effectively promote the precipitation of the lithium metal.

The negative coating layer 45 may further include a binder, and the binder may be a conductive binder. Also, the negative coating layer 45 may further include general additives such as a filler, a dispersing agent, an ion conductive agent, and the like.

The thickness of the negative coating layer 45 may be, for example, 100 nm to 20 µm, or 500 nm to 10 µm, or 1 µm to 5 µm.

For example, the precipitation-type negative electrode 40' may further include a thin film on the surface of the current collecting layer 41, that is, between the current collecting layer 41 and the negative coating layer 45. The thin film may include an element capable of forming alloys with lithium. The element capable of forming the alloys with lithium may be, for example, gold, silver, zinc, tin, indium, silicon, aluminum, bismuth, and the like, which may be used alone or as an alloy of more than one. The thin film may further planarize the precipitation pattern of the lithium metal layer 44 and further improve the characteristics of the all-solid battery. The thin film may be formed, for example, by methods such as vacuum deposition, sputtering, or plating. The thickness of the thin film may be, for example, 1 nm to 500 nm.

### A solid electrolyte layer

The solid electrolyte layer 30 may include a sulfide-based solid electrolyte, an oxide-based solid electrolyte, etc. The specific details of the sulfide-based solid electrolyte and the oxide-based solid electrolyte are as described above.

In one example, the solid electrolyte included in the positive electrode 20 and the solid electrolyte included in the solid electrolyte layer 30 may include the same compound or different compounds. For example, if both the positive electrode 20 and the solid electrolyte layer 30 include an argyrodite-type sulfide-based solid electrolyte, the overall performance of the all-solid rechargeable battery may be improved. Also, as another example, if both the positive electrode 20 and the solid electrolyte layer 30 include the coated solid electrolyte described above, the all-solid rechargeable battery may realize a high-capacity, high energy density, and excellent initial efficiency and lifespan characteristic.

Meanwhile, the average particle diameter D50 of the solid electrolyte included in the positive electrode 20 may be smaller than the average particle diameter D50 of the solid electrolyte included in the solid electrolyte layer 30. In this case, the overall performance may be improved by maximizing the energy density of the all-solid battery and increasing the mobility of lithium ions. For example, the average particle diameter D50 of the solid electrolyte included in the positive electrode 20 may be 0.1 µm to 1.0 µm, or 0.1 µm to 0.8 µm, and the average particle diameter D50 of the solid electrolyte included in the solid electrolyte layer 30 may be 1.5 µm to 5.0 µm, or 2.0 µm to 4.0 µm, or 2.5 µm to 3.5 µm. If these particle diameter ranges is satisfied, the energy density of the all-solid rechargeable battery may be maximized and the transferring of lithium ions is easy and then the resistance may be suppressed, thereby improving the overall performance of the all-solid rechargeable battery. Here, the average particle diameter D50 of the solid electrolyte may be measured through a particle size analyzer using the laser diffraction method. Alternatively, about 20 particles may be selected from a microscope photo such as a scanning electron microscope to measure the particle size and obtain the particle size distribution, and the D50 value may be calculated from this.

The solid electrolyte layer may include a binder in addition to the solid electrolyte. Herein, the binder may include a styrene butadiene rubber, polytetrafluoroethylene, polyvinylidene fluoride, polyethylene, an acrylate-based polymer, or a combination thereof, but is not limited thereto. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyrl isobutyrate, xylene, toluene, benzene, hexane, or a combination thereof. Since a forming process of the solid electrolyte layer is well known in the art, a detailed description thereof will be omitted.

The thickness of the solid electrolyte layer may be, for example, about 10 µm to about 150 µm.

The solid electrolyte layer may further include an alkali metal salt and/or an ionic liquid and/or a conductive polymer.

The alkali metal salt may be, for example, lithium salt. The content of lithium salt in the solid electrolyte layer may be 1M or more, for example, 1M to 4M.

In this case, the lithium salt may improve the ion conductivity by improving the lithium ion mobility in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoromethanesulfonyl)imide (LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄, or a mixture thereof.

In addition, the lithium salt may be an imide-based salt, for example, the imide-based lithium salt may be lithium bis(trifluoromethanesulfonyl) imide (LiTFSI, LiN(SO₂CF₃)₂), and lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below a room temperature, so it refers to a salt or a room temperature fusion salt that is liquid at a room temperature and consists only of ions.

The ionic liquid may be a compound including a) one or more positive ions selected from ammonium-based, pyrrolidinium-based, pyridinium-based, pyrimidinium-based, imidazole-based, piperidinium-based, pyrazole-based, oxazole-based, pyridazinium-based, phosphonium-based, sulfonium-based, triazole-based and mixtures thereof, and b) one or more negative ions selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, FSO₂₂N-, (C₂F₅SO₂)2N-, (C₂F₅SO₂, CF₃SO₂)N-, and (CF₃SO₂)₂N-.

The ionic liquid, for example, may be one or more selected from a group consisting of N-methyl-N-propylpyrroledium bis(trifluoromethanesulfonyl)imide, N-butyl-N-methylpyrroledium bis(3-trifluoromethylsulfonyl)imide, 1-butyl-3-methylimidazolelium bis(trifluoromethylsulfonyl)amide, and 1-ethyl-3-methylimidazoleium bis(trifluoromethylsulfonyl)amide.

A weight ratio of the solid electrolyte and the ionic liquid in the solid electrolyte layer may be about 0.1:99.9 to about 90:10, for example, about 10:90 to about 90:10, about 20:80 to about 90:10, about 30:70 to about 90: 10, about 40:60 to about 90:10, or about 50:50 to about 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state battery may be improved.

The all-solid rechargeable battery may be a unit cell having a structure of a positive electrode/solid electrolyte layer/negative electrode, a bi-cell having a structure of positive electrode/solid electrolyte layer/negative electrode/solid electrolyte layer/positive electrode, or a stacked battery in which the structure of the unit cell is repeated.

The shape of the all-solid battery is not particularly limited, and may be, for example, a coin type, a button type, a sheet type, a stack type, a cylindrical shape, a flat type, and the like. In addition, the all-solid-state battery may be applied to a large-sized battery used in an electric vehicle or the like. For example, the all-solid-state battery may also be used in a hybrid vehicle such as a plug-in hybrid electric vehicle (PHEV). In addition, it may be used in a field requiring a large amount of power storage, and may be used, for example, in an electric bicycle or a power tool.

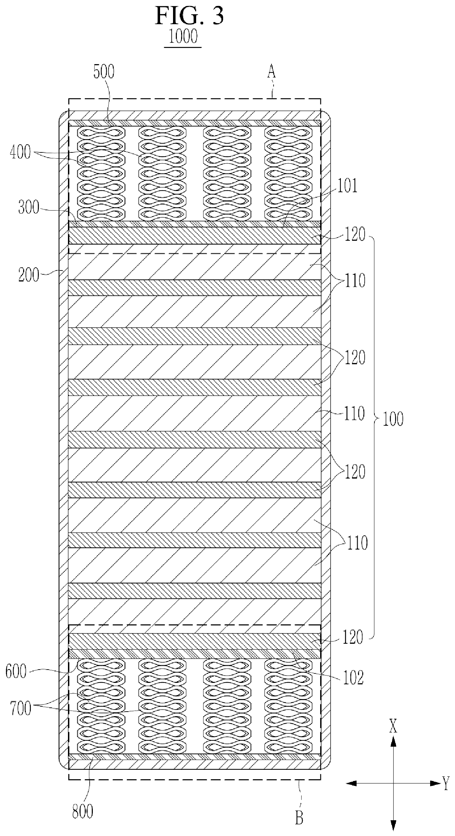

Below, the all-solid rechargeable battery according to an embodiment is described with reference to FIG. 3 to FIG. 7. The all-solid rechargeable battery according to an embodiment is a rechargeable battery that may be repeatedly charged and discharged. Hereinafter, the positive electrode includes a cathode, and the negative electrode includes an anode.

For example, the all-solid rechargeable battery according to an embodiment includes an all-solid cell stack including a plurality of all-solid unit cells stacked in one direction. Referring to FIG. 2, each of the plurality of all-solid unit cells in the all-solid cell stack includes an all-solid battery including the precipitation-type negative electrode described above, so the thickness may vary due to the lithium metal layer formed during the charging, but is not limited to this.

As another example, each of the plurality of all-solid unit cells of the all-solid cell stack of the all-solid rechargeable battery according to an embodiment may include the all-solid battery including the negative electrode described above with reference to FIG. 1.

FIG. 3 is a cross-sectional view showing an all-solid rechargeable battery according to an embodiment.

Referring to FIG. 3, an all-solid rechargeable battery 1000 according to an embodiment includes an all-solid cell stack 100, a case 200, a first end plate 300, a plurality of first metal wave springs 400, a second end plate 500, a third end plate 600, a plurality of second metal wave springs 700, and a fourth end plate 800.

The all-solid cell stack 100 is positioned inside the case 200. The all-solid cell stack 100 includes a plurality of all-solid unit cells 110 and a plurality of cushioning pads 120.

The plurality of all-solid unit cells 110 are stacked in the first direction X. The plurality of all-solid unit cells 110 each include a negative electrode, a positive electrode, and a solid electrolyte layer. Here, the first direction 3 may include a vertical direction, but is not limited thereto.

The negative electrode may include at least one of the negative electrode included in the above-mentioned all-solid rechargeable battery and the precipitation-type negative electrode, but is not limited thereto. The negative electrode may have a plate or a foil shape, but is not limited thereto.

The positive electrode is positioned on the negative electrode with the solid electrolyte layer in between. The positive electrode may include the positive electrode included in the all-solid rechargeable battery described above, but is not limited thereto. The positive electrode may have a plate or a foil shape, but is not limited thereto.

The solid electrolyte layer is positioned between the negative electrode and the positive electrode. The solid electrolyte layer may include the solid electrolyte layer included in the all-solid rechargeable battery described above, but is not limited thereto. The solid electrolyte layer may have a layer form between the negative electrode and the positive electrode, but is not limited thereto.

Each of the plurality of all-solid unit cells 110 may have various known stacking structures. For example, the all-solid unit cell 110 may have a unit cell with a structure of the positive electrode/solid electrolyte layer/negative electrode, a bicell with a structure of the positive electrode/solid electrolyte layer/negative electrode/solid electrolyte layer/positive electrode, or a stacked battery structure with a repeating structure of the unit cell, but is not limited thereto.

The plurality of cushioning pads 120 are positioned between the plurality of all-solid unit cells 110 stacked in the first direction X. Each of the plurality of cushioning pads 120 is positioned between the neighboring all-solid unit cells 110 among the plurality of all-solid unit cells 110. Among the plurality of cushioning pads 120, the cushioning pad 120 positioned at the uppermost layer of the first direction is positioned between the first end plate 300 and the all-solid unit cell 110, which is positioned on the uppermost layer among the plurality of all-solid unit cells 110. Among the plurality of cushioning pads 120, the cushioning pad 120 positioned at the bottom of the first direction is positioned between the third end plate 600 and the all-solid unit cell 110, which is positioned on the lowest level among the plurality of all-solid unit cells 110. The plurality of cushioning pads 120 may include various known elasticity layers used in various known all-solid rechargeable batteries 1000.

The case 200 stores the all-solid cell stack of 100 in the internal space. The case 200 has a metal can shape, but is not limited to this and may have a pouch shape. The case 200 may have a square pillar shape, but is not limited to this and may have a polygonal pillar shape such as a triangular pillar shape, a pentagonal pillar shape, a hexagonal pillar shape, a heptagonal pillar shape, an octagonal pillar shape, a circular pillar shape, an elliptical pillar shape, or a loop pillar shape. Various known coating layers may be coated on the inner and outer surfaces of the case 200.

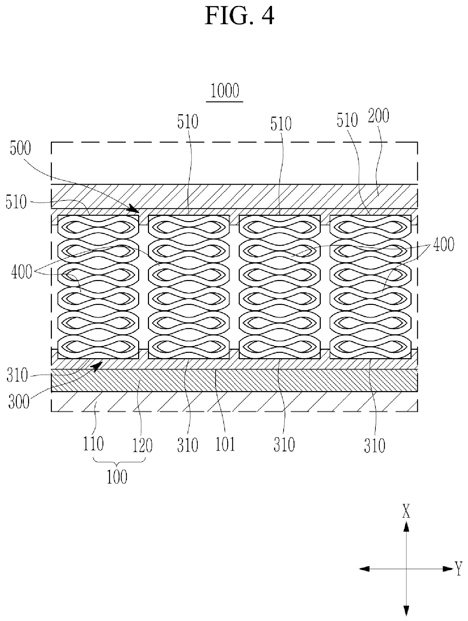

FIG. 4 is an enlarged cross-sectional view of a part A in FIG. 3.

Referring to FIG. 3 and FIG. 4, the first end plate 300 is placed between the first end portion 101 and the case 200 in the first direction X of the all-solid cell stack 100. The first end plate 300 is positioned between the cushioning pad 120, which is positioned on the top layer of the first direction X of the all-solid cell stack 100, and the plurality of first metal wave springs 400. The first end plate 300 is in contact with the cushioning pad 120 and the plurality of first metal wave springs 400. The first end plate 300 presses the all-solid cell stack 100 in the first direction by an elasticity by the plurality of first metal wave springs 400. The first end plate 300 includes the plurality of first depressed portions 310.

The plurality of first depressed portions 310 are arranged to be spaced apart from each other in a second direction Y, which intersects the first direction X. Here, the second direction Y may include a horizontal direction in FIG. 3, but is not limited thereto. The plurality of first depressed portions 310 have a depressed shape from the surface of the first end plate 300. The plurality of first metal wave springs 400 are respectively inserted to the plurality of first depressed portions 310. By inserting and supporting the plurality of first metal wave springs 400 in the plurality of first depressed portions 310, the deviation of the plurality of first metal wave springs 400 from the plurality of first depressed portions 310 is suppressed.

The first end plate 300 has a plate shape including at least one of aluminum and stainless steel, but is not limited to this. For example, the first end plate 300 may include various known materials such as polymer, amorphous, and ceramic.

The plurality of first metal wave springs 400 are positioned between the first end plate 300 and the case 200. The plurality of first metal wave springs 400 are positioned between the first end plate 300 and the second end plate 500. The plurality of first metal wave springs 400 are in contact with the first end plate 300 and the second end plate 500. The plurality of first metal wave springs 400 are arranged spaced apart from each other in the second direction Y between the first end plate 300 and the second end plate 500. The plurality of first metal wave springs 400 are respectively inserted into the plurality of first depressed portions 310 of the first end plate 300 and the plurality of second depressed portions 510 of the second end plate 500 and are supported to the first depressed portions 310 and the second depressed portions 510. As the plurality of first metal wave springs 400 are inserted and supported onto the plurality of first depressed portions 310 and the plurality of second depressed portions 510 between the first end plate 300 and the second end plate 500, the deviation of the plurality of first metal wave springs 400 from the plurality of first depressed portions 310 of the first end plate 300 and the plurality of second depressed portions 510 of the second end plate 500 are suppressed.

The plurality of first metal wave springs 400 each includes a metal wave spring. Since each of the plurality of first metal wave springs 400 includes the metal wave spring, it has greater elasticity recovery even if it has a thinner thickness in the first direction compared to a known coil spring, thereby the thickness of the all-solid rechargeable battery 1000 in the first direction X is thinner.

In addition, since each of the plurality of first metal wave springs 400 includes the metal wave spring, even if the thickness of the first direction X of the all-solid cell stack 100 changes during the charge and discharge, by the elasticity recovery of the plurality of first metal wave springs 400, the first end plate 300 uniformly presses the all-solid cell stack 100 in the first direction X.

In addition, as the plurality of first metal wave springs 400 each includes a metal wave spring, because there is no change in physical characteristics over a wide temperature range (for example -20 °C to 80 °C) inherent to a metal compared to a polymer elasticity layer, which is a known pressurizing means, in the wide temperature range, the first end plate 300 uniformly presses the all-solid cell stack 100 in the first direction by the elasticity recovery of the plurality of first metal wave springs 400.

In addition, as the plurality of first metal wave springs 400 each includes the metal wave spring, because the all-solid cell stack 100 has the elasticity in the first direction X and is supported to the plurality of first metal wave springs 400 and the first end plate 300, the impact resistance of the all-solid rechargeable battery 1000 is improved.

In addition, as the plurality of first metal wave springs 400 each includes the metal wave spring, because the metal's inherent thermal conductivity is improved compared to the polymer elasticity layer, which is a known pressurizing means, and heat from the all-solid cell stack 100 is conducted and radiated through the first end plate 300 and the plurality of first metal wave springs 400, a heat dissipation effect for the all-solid cell stack 100 is improved.

For example, by including the plurality of first metal wave springs 400 and the first end plate 300, corresponding to the all-solid cell stack 100, whose thickness can change during the charge and discharge, it is possible to provide the all-solid rechargeable battery 1000 of which the all-solid cell stack 100 is uniformly pressed over a wide temperature range, the impact resistance is improved, the heat dissipation effect for the all-solid cell stack 100 is improved, the entire thickness becomes thinner, and simultaneously, the energy density is improved compared to the thickness.

For example, each of the plurality of first metal wave springs 400 includes a ring type of wave spring. As the plurality of first metal wave springs 400 each includes the ring type wave spring, the lifespan is improved compared to a known flat type of wave spring, and simultaneously the generation of a powder due to the friction by a spring elasticity recovery may be suppressed. Here, the flat type of wave spring may include a plate type of wave spring whose longitudinal cross-section has a wave shape, but is not limited thereto.

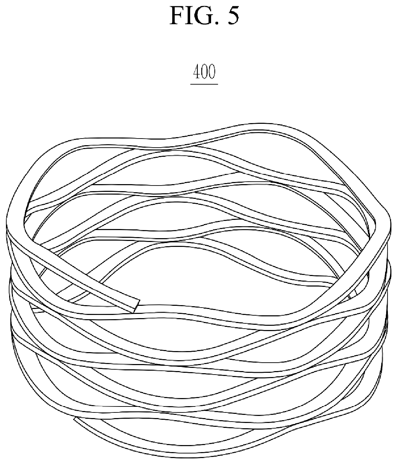

FIG. 5 is a view showing an example of a first metal wave spring of an all-solid rechargeable battery according to an embodiment.

Referring to FIG. 5, as an example of the first metal wave spring 400, the first metal wave spring 400 may include a wave spring in which waves that are symmetrical to each other in form are stacked and extended in a direction in which the elasticity restoring force is generated. The first metal wave spring 400 may include a crest to crest wave spring, but is not limited thereto.

As the first metal wave spring 400 includes the wave spring in which the waves with the symmetrical form to each other are stacked and extended in the direction in which the elasticity restoring force is generated, the lifespan is improved compared to a flat type of wave spring, and simultaneously the generation of the powder due to the friction by the spring elasticity recovery may be suppressed.

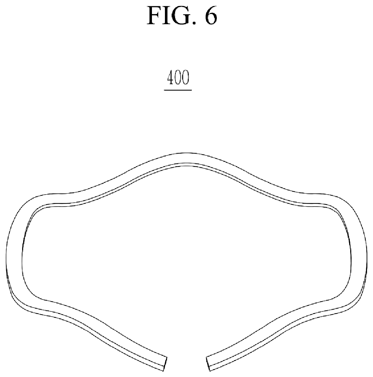

FIG. 6 is a view showing another example of a first metal wave spring of an all-solid rechargeable battery according to an embodiment.

Referring to FIG. 6, as another example of the first metal wave spring 400, the first metal wave spring 400 may include a wave spring in which a single-layer wave is extended in a ring shape. The first metal wave spring 400 may include a single turn wave spring, but is not limited thereto. Since the first metal wave spring 400 includes the wave spring in which the single-layer wave is extended in the ring shape, the thickness may simultaneously be thinner while improving the lifespan compared to a flat type of wave spring.

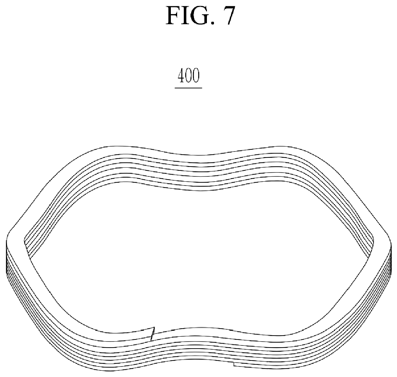

FIG. 7 is a view showing another example of a first metal wave spring of an all-solid rechargeable battery according to an embodiment.

Referring to FIG. 7, as another example of the first metal wave spring 400, the first metal wave spring 400 may include a wave spring in which waves of the same shape are stacked and extended in a direction in which an elasticity restoring force is generated. The first metal wave spring 400 may include a nested wave spring, but is not limited thereto. As the first metal wave spring 400 may include the wave spring in which waves of the same shape are stacked and extended in the direction in which the elasticity restoring force is generated, compared to a flat type of wave spring, and the lifespan may be improved and the thickness becomes thinner, while simultaneously the elasticity recovery may be improved.

Referring to FIG. 3 and FIG. 4, the second end plate 500 is placed between the plurality of first metal wave springs 400 and the case 200. The second end plate 500 is in contact with the case 200 and the plurality of first metal wave springs 400. The second end plate 500 includes the plurality of second depressed portions 510.

The plurality of second depressed portions 510 are arranged to be spaced apart from each other in the second direction Y by corresponding to the plurality of first depressed portions 310 of the first end plate 300. The plurality of second depressed portions 510 face the plurality of first depressed portions 310 with the plurality of first metal wave springs 400 in between. The plurality of second depressed portions 510 have a depressed shape from the surface of the second end plate 500. The plurality of first metal wave springs 400 are inserted into the plurality of second depressed portions 510, respectively. By inserting and supporting the plurality of second metal wave springs 700 in the plurality of second depressed portions 510, the deviation of the plurality of second metal wave springs 700 from the plurality of second depressed portions 510 is suppressed.

The second end plate 500 has a plate shape including at least one of aluminum and stainless steel, but is not limited to this. For example, the second end plate 500 may include various known materials such as polymer, amorphous, and ceramic.

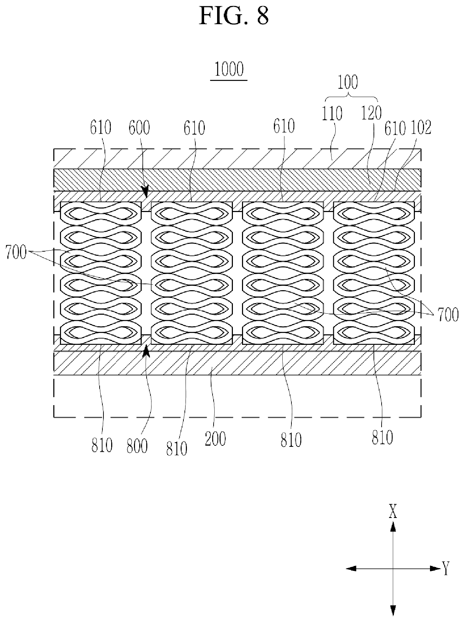

FIG. 8 is an enlarged cross-sectional view of a part B in FIG. 3.

Referring to FIG. 3 and FIG. 8, the third end plate 600 is positioned between the second end portion 102 of the all-solid cell stack 100 in the first direction X and the case 200. The third end plate 600 is positioned between the cushioning pad 120, which is positioned at the bottom of the all-solid cell stack 100 in the first direction X, and the plurality of second metal wave springs 700. The third end plate 600 is in contact with the cushioning pad 120 and the plurality of second metal wave springs 700. The third end plate 600 presses the all-solid cell stack 100 in the first direction by the elasticity restoring force due to the plurality of second metal wave springs 700. The third end plate 600 includes the plurality of third depressed portions 610.

The plurality of third depressed portions 610 are arranged to be spaced apart from each other in the second direction Y. The plurality of third depressed portions 610 have a depressed shape from the surface of the third end plate 600. The each of the plurality of second metal wave springs 700 are inserted into each of the plurality of third depressed portions 610. By inserting and supporting the plurality of second metal wave springs 700 into the plurality of third depressed portions 610, the plurality of second metal wave springs 700 are suppressed from deviating from the plurality of third depressed portions 610.

The third end plate 600 has a plate shape including at least one of aluminum and stainless steel, but is not limited to this. For example, the third end plate 600 may include various known materials such as polymer, amorphous, and ceramic.

The plurality of second metal wave springs 700 are positioned between the third end plate 600 and the case 200. The plurality of second metal wave springs 700 are positioned between the third end plate 600 and the fourth end plate 800. The plurality of second metal wave springs 700 are in contact with the third end plate 600 and the fourth end plate 800. The plurality of second metal wave springs 700 are arranged spaced apart from each other in the second direction Y between the third end plate 600 and the fourth end plate 800. The plurality of second metal wave springs 700 are respectively inserted into the plurality of third depressed portions 610 of the third end plate 600 and the plurality of fourth depressed portions 810 of the fourth end plate 800, respectively, and are supported on the third depressed portions 610 and the fourth depressed portions 810. By inserting and supporting the plurality of second metal wave springs 700 onto the plurality of third depressed portions 610 and the plurality of fourth depressed portions 810 between the third end plate 600 and the fourth end plate 800, the deviation of the plurality of second metal wave springs 700 is suppressed from the plurality of third depressed portions 610 of the third end plate 600 and the plurality of fourth depressed portions 810 of the fourth end plate 800.

The plurality of second metal wave springs 700 each includes a metal wave spring. Since each of the plurality of second metal wave springs 700 includes the metal wave spring, it has greater elasticity recovery even if it has a thinner thickness in the first direction compared to a known coil spring, thereby the thickness of the all-solid rechargeable battery 1000 in the first direction X is thinner.

In addition, since each of the plurality of second metal wave springs 700 includes the metal wave spring, even if the thickness of the first direction X of the all-solid cell stack 100 changes during the charge and discharge, by the elasticity recovery of the plurality of second metal wave springs 700, the third end plate 600 uniformly presses the all-solid cell stack 100 in the first direction X.

In addition, as the plurality of second metal wave springs 700 each include a metal wave spring, because there is no change in physical characteristics over a wide temperature range (for example -20 °C to 80 °C) inherent to a metal compared to a polymer elasticity layer, which is a known pressurizing means, in the wide temperature range, the third end plate 600 uniformly presses the all-solid cell stack 100 in the first direction by the elasticity recovery of the plurality of second metal wave springs 700.

In addition, as the plurality of second metal wave springs 700 each include the metal wave spring, because the all-solid cell stack 100 has the elasticity in the first direction X and is supported to the plurality of second metal wave springs 700 and the third end plate 600, the impact resistance of the all-solid rechargeable battery 1000 is improved.

In addition, as the plurality of second metal wave springs 700 each include the metal wave spring, because the metal's inherent thermal conductivity is improved compared to the polymer elasticity layer, which is a known pressurizing means, and heat from the all-solid cell stack 100 is conducted and radiated through the third end plate 600 and the plurality of second metal wave springs 700, a heat dissipation effect for the all-solid cell stack 100 is improved.

For example, by including the plurality of second metal wave springs 700 and the third end plate 600, corresponding to the all-solid cell stack 100, whose thickness may change during the charge and discharge, it is possible to provide the all-solid rechargeable battery 1000 of which the all-solid cell stack 100 is uniformly pressed over a wide temperature range, the impact resistance is improved, the heat dissipation effect for the all-solid cell stack 100 is improved, the entire thickness becomes thinner, and simultaneously, the energy density is improved compared to the thickness.

For example, each of the plurality of first metal wave springs 700 includes a ring type wave spring. As the plurality of second metal wave springs 700 each includes the ring type wave spring, the lifespan is improved compared to a known flat type of wave spring, and simultaneously the generation of a powder due to the friction by a spring elasticity recovering may be suppressed. Here, the flat type of wave spring may include a plate type of wave spring whose longitudinal cross-section has a wave shape, but is not limited thereto.

As an example of the second metal wave spring 700, the second metal wave spring 700 may include a wave spring in which waves of a form symmetrical to each other are stacked and extended in a direction in which an elasticity restoring force is generated, but is not limited thereto.

As the second metal wave spring 700 includes the wave spring in which the waves of the symmetrical form to each other are stacked and extended in the direction in which the elasticity restoring force is generated, the lifespan is improved compared to a flat type of wave spring, and simultaneously the generation of the powder due to the friction by the spring elasticity recovering may be suppressed.

As another example of the second metal wave spring 700, the second metal wave spring 700 may include a wave spring in which a single-layer wave is extended in a ring shape.

Since the second metal wave spring 700 includes the wave spring in which the single-layer wave is extended in the ring shape, the thickness may simultaneously be thinner while improving the lifespan compared to a flat type of wave spring.

As another example of the second metal wave spring 700, the second metal wave spring 700 may include a wave spring in which waves of the same shape are stacked and extended in a direction in which an elasticity restoring force is generated.

As the second metal wave spring 700 may include the wave spring in which waves of the same shape are stacked and extended in the direction in which the elasticity restoring force is generated, compared to a flat type of wave spring, the lifespan may be improved and the thickness becomes thinner, and simultaneously the elasticity recovery may be improved.

A fourth end plate 800 is positioned between the plurality of second metal wave springs 700 and the case 200. The fourth end plate 800 is in contact with the case 200 and the plurality of second metal wave springs 700. The fourth end plate 800 includes the plurality of fourth depressed portions 810.

The plurality of fourth depressed portions 810 is arranged to be spaced apart from each other in the second direction Y by corresponding to the plurality of third depressed portions 610 of the third end plate 600. The plurality of fourth depressed portions 810 face the plurality of third depressed portions 610 with the plurality of second metal wave springs 700 in between. The plurality of fourth depressed portions 810 has a depressed shape from the surface of the fourth end plate 800. The plurality of second metal wave springs 700 are respectively inserted into a plurality of fourth depressed portions 810, respectively. By inserting and supporting the plurality of second metal wave springs 700 in the plurality of fourth depressed portions 810, the deviation of the plurality of second metal wave springs 700 from the plurality of fourth depressed portions 810 is suppressed.

The fourth end plate 800 has a plate shape including at least one of aluminum and stainless steel, but is not limited to this. For example, the fourth end plate 800 may include various known materials such as polymer, amorphous, and ceramic.

For example, since each of the plurality of first metal wave springs 400 and the plurality of second metal wave springs 700 includes the metal wave spring, it has greater elasticity recovery even if it has a thinner thickness in the first direction compared to a known coil spring, thereby the thickness of the all-solid rechargeable battery 1000 in the first direction X is thinner.

In addition, since each of the plurality of first metal wave springs 400 and the plurality of second metal wave springs 700 includes the metal wave spring, even if the thickness of the first direction X of the all-solid cell stack 100 changes during the charge and discharge, by the elasticity recovery of the plurality of the plurality of first metal wave springs 400 and the plurality of second metal wave springs 700, the first end plate 300 and the third end plate 600 uniformly press the all-solid cell stack 100 in the first direction X.

In addition, as the plurality of first metal wave springs 400 and the plurality of second metal wave springs 700 each include a metal wave spring, because there is no change in physical characteristics over a wide temperature range (for example -20 °C to 80 °C) inherent to a metal compared to a polymer elasticity layer, which is a known pressurizing means, in the wide temperature range, the first end plate 300 and the third end plate 600 uniformly press the all-solid cell stack 100 in the first direction by the elasticity recovery of the plurality of the first metal wave springs 400 and the plurality of second metal wave springs 700.

In addition, as the plurality of first metal wave springs 400 and the plurality of second metal wave springs 700 each include the metal wave spring, because the all-solid cell stack 100 has the elasticity in the first direction X and is supported to the plurality of first metal wave springs 400 and the first end plate 300, and the plurality of second metal wave springs 700 and the third end plate 600, the impact resistance of the all-solid rechargeable battery 1000 is improved.

In addition, as the plurality of first metal wave springs 400 and the plurality of second metal wave springs 700 each include the metal wave spring, because the metal's inherent thermal conductivity is improved compared to the polymer elasticity layer, which is a known pressurizing means, and heat from the all-solid cell stack 100 is conducted and radiated through the first end plate 300 and the plurality of first metal wave springs 400, the third end plate 600 and the plurality of second metal wave springs 700, and the case 200, a heat dissipation effect for the all-solid cell stack 100 is improved.

For example, by including the plurality of first metal wave springs 400 and the first end plate 300, and the plurality of second metal wave springs 700 and the third end plate 600, corresponding to the all-solid cell stack 100, whose thickness may change during the charge and discharge, it is possible to provide the all-solid rechargeable battery 1000 of which the all-solid cell stack 100 is uniformly pressed over a wide temperature range, the impact resistance is improved, and the heat dissipation effect for the all-solid cell stack 100 is improved, the entire thickness becomes thinner, and simultaneously, the energy density is improved compared to the thickness.

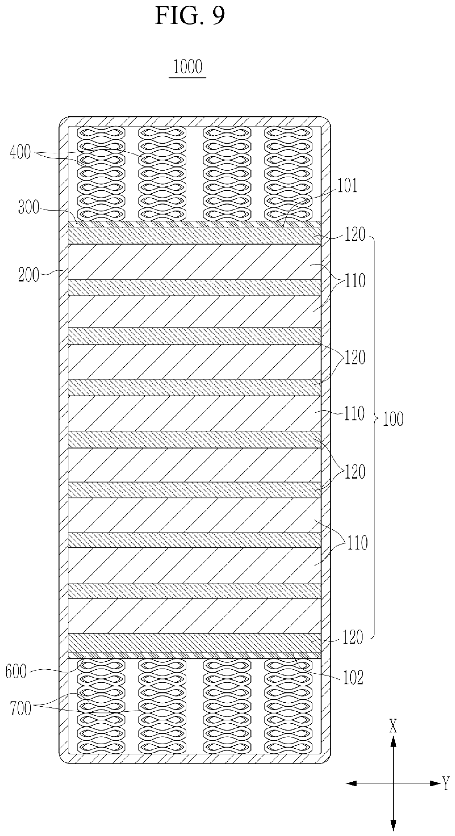

Now, the all-solid rechargeable battery according to another embodiment is described with reference to FIG. 9.

Hereinafter, parts that are different from the all-solid rechargeable battery according to the above-described embodiment will be described.

FIG. 9 is a cross-sectional view showing an all-solid rechargeable battery according to another embodiment.

Referring to FIG. 9, an all-solid rechargeable battery 1000 according to another embodiment includes an all-solid cell stack 100, a case 200, a first end plate 300, a plurality of first metal wave springs 400, a third end plate 600, and a plurality of second metal wave springs 700.

The plurality of first metal wave springs 400 are placed between the first end plate 300 and the case 200. The plurality of first metal wave springs 400 is contact with the first end plate 300 and the case 200. The plurality of first metal wave springs 400 are arranged spaced apart from each other in the second direction Y between the first end plate 300 and the case 200. Each of the plurality of first metal wave springs 400 is inserted into each of the plurality of first depressed portions of the first end plate 300 and is supported onto the first depressed portions. By inserting and supporting the plurality of first metal wave springs 400 onto the plurality of first depressed portions between the first end plate 300 and the case 200, the deviation of the plurality of first metal wave springs 400 from between the first end plate 300 and case 200 is suppressed.

For example, the case 200 may include a plurality of other depressed portions onto which the plurality of first metal wave springs 400 are inserted and supported, but it is not limited thereto.

The plurality of second metal wave springs 700 is positioned between the third end plate 600 and the case 200. The plurality of second metal wave springs 700 is in contact with the third end plate 600 and the case 200. The plurality of second metal wave springs 700 are arranged spaced apart from each other in the second direction Y between the third end plate 600 and the case 200. Each of the plurality of second metal wave springs 700 is inserted into each of the plurality of third depressed portions of the third end plate 600 and supported on the third depressed portions. By inserting and supporting the plurality of second metal wave springs 700 in the plurality of third depressed portions between the third end plate 600 and the case 200, the deviating of the plurality of second metal wave springs 700 from between the third end plate 600 and the case 200 is suppressed.

For example, the case 200 may include a plurality of other depressed portions into which the plurality of second metal wave springs 700 is inserted and supported, but is not limited thereto.

For example, since each of the plurality of first metal wave springs 400 and the plurality of second metal wave springs 700 includes the metal wave spring, it has greater elasticity recovery even if it has a thinner thickness in the first direction compared to a known coil spring, so the thickness of the all-solid rechargeable battery 1000 in the first direction X is thinner.

In addition, since each of the plurality of first metal wave springs 400 and the plurality of second metal wave springs 700 includes the metal wave spring, even if the thickness of the first direction X of the all-solid cell stack 100 changes during the charge and discharge, by the elasticity recovery of the plurality of the plurality of first metal wave springs 400 and the plurality of second metal wave springs 700, the first end plate 300 and the third end plate 600 uniformly presses the all-solid cell stack 100 in the first direction X.

In addition, as the plurality of first metal wave springs 400 and the plurality of second metal wave springs 700 each include a metal wave spring, because there is no change in physical characteristics over a wide temperature range (for example -20 °C to 80 °C) inherent to a metal compared to a polymer elasticity layer, which is a known pressurizing means, in the wide temperature range, the first end plate 300 and the third end plate 600 uniformly press the all-solid cell stack 100 in the first direction by the elasticity recovery of the plurality of first metal wave springs 400 and the plurality of second metal wave springs 700.

In addition, as the plurality of first metal wave springs 400 and the plurality of second metal wave springs 700 each include the metal wave spring, because the all-solid cell stack 100 has the elasticity in the first direction X and is supported to the plurality of first metal wave springs 400 and the first end plate 300, and the plurality of second metal wave springs 700 and the third end plate 600, the impact resistance of the all-solid rechargeable battery 1000 is improved.

In addition, as the plurality of first metal wave springs 400 and the plurality of second metal wave springs 700 each includes the metal wave spring, because the metal's inherent thermal conductivity is improved compared to the polymer elasticity layer, which is a known pressurizing means, and heat from the all-solid cell stack 100 is conducted and radiated through the first end plate 300 and the plurality of first metal wave springs 400, the third end plate 600 and the plurality of second metal wave springs 700, and the case 200, a heat dissipation effect for the all-solid cell stack 100 is improved.

For example, by including the plurality of first metal wave springs 400 and the first end plate 300, and the plurality of second metal wave springs 700 and the third end plate 600, corresponding to the all-solid cell stack 100, whose thickness may change during the charge and discharge, it is possible to provide the all-solid rechargeable battery 1000 of which the all-solid cell stack 100 is uniformly pressed over a wide temperature range, the impact resistance is improved, the heat dissipation effect for the all-solid cell stack 100 is improved, the entire thickness becomes thinner, and simultaneously, the energy density is improved compared to the thickness.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### [Description of symbols]

all-solid unit cell 110, all-solid cell stack 100, case 200, first end plate 300, first metal wave spring 400

## Claims

1. An all-solid rechargeable battery comprising:
an all-solid cell stack comprising a plurality of all-solid unit cells stacked in a first direction;
a case accommodating the all-solid cell stack therein;
a first end plate between a first end portion of the all-solid cell stack in the first direction and the case; and
a plurality of first metal wave springs between the first end plate and the case.

2. The all-solid rechargeable battery as claimed in claim 1, wherein the plurality of first metal wave springs are in contact with the first end plate.

3. The all-solid rechargeable battery as claimed in claim 2, wherein:
the first end plate comprises a plurality of first depressed portions arranged spaced apart from each other in a second direction intersecting the first direction, and
the plurality of first metal wave springs are each inserted into the plurality of first depressed portions.

4. The all-solid rechargeable battery as claimed in claim 3, further comprising a second end plate between the plurality of first metal wave springs and the case and in contact with the plurality of first metal wave springs.

5. The all-solid rechargeable battery as claimed in claim 4, wherein:
the second end plate comprises a plurality of second depressed portions spaced apart from each other in the second direction and corresponding to the plurality of first depressed portions of the first end plate, and
the plurality of first metal wave springs are each inserted into the plurality of second depressed portions.

6. The all-solid rechargeable battery as claimed in claim 4, wherein the second end plate is in contact with the case.

7. The all-solid rechargeable battery as claimed in claim 2, wherein the plurality of first metal wave springs are in contact with the case.

8. The all-solid rechargeable battery as claimed in claim 1, wherein the plurality of first metal wave springs each comprise a ring type wave spring.

9. The all-solid rechargeable battery as claimed in claim 8, wherein the ring type wave spring comprsises a wave spring of which waves with a shape symmetrical to each other are stacked and extended in a direction in which an elasticity restoring force is generated.

10. The all-solid rechargeable battery as claimed in claim 8, wherein the ring type wave spring comprises a wave spring in which a single-layer wave is extended in a ring shape.

11. The all-solid rechargeable battery as claimed in claim 8, wherein the ring type wave spring comprises a wave spring in which waves of the same shape are stacked and extended in a direction in which an elasticity restoring force is generated.

12. The all-solid rechargeable battery as claimed in claim 1, further comprising:
a third end plate between a second end portion of the all-solid cell stack in the first direction and the case; and
a plurality of second metal wave springs between the third end plate and the case.

13. The all-solid rechargeable battery as claimed in claim 12, wherein the plurality of second metal wave springs contact the third end plate.

14. The all-solid rechargeable battery as claimed in claim 13, wherein:
the third end plate comprises a plurality of third depressed portions spaced apart from each other in a second direction intersecting the first direction, and
the plurality of second metal wave springs are each inserted into the plurality of third depressed portions.

15. The all-solid rechargeable battery as claimed in claim 14, further comprising a fourth end plate positioned between the plurality of second metal wave springs and the case and in contact with the plurality of second metal wave springs.

16. The all-solid rechargeable battery as claimed in claim 15, wherein:
the fourth end plate comprises a plurality of fourth depressed portions spaced apart from each other in the second direction and corresponding to the plurality of third depressed portions of the third end plate, and
the plurality of second metal wave springs are each inserted into the plurality of fourth depressed portions.

17. The all-solid rechargeable battery as claimed in claim 15, wherein the fourth end plate is in contact with the case.

18. The all-solid rechargeable battery as claimed in claim 12, wherein the plurality of second metal wave springs are in contact with the case.

19. The all-solid rechargeable battery as claimed in claim 1, wherein the all-solid cell stack further comprises a plurality of cushioning pads between the plurality of all-solid unit cells.

20. The all-solid rechargeable battery as claimed in claim 1, wherein each of the all-solid unit cells comprises:
a negative electrode;
a positive electrode on the negative electrode; and
a solid electrolyte layer between the negative electrode and the positive electrode.
